# FASCICULE DE BREVET EUROPEEN

(11) **EP 3 354 516 B1**
(45) Date de publication et mention de la délivrance du brevet: **23.10.2019**
(21) Numéro de dépôt: 18152761.5
(22) Date de dépôt: 22.01.2018
(51) Int. Cl.: B60P 3/04

(54) **VÉHICULE POUR LE TRANSPORT DE CHEVAUX**
FAHRZEUG ZUM TRANSPORT VON PFERDEN
HORSE TRANSPORT VEHICLE

(30) Priorité: 25.01.2017 FR 1750601
(43) Date de publication de la demande: 01.08.2018
(73) Titulaire: General au Service du Cheval "G.S.C.", 50300 Ponts (FR)
(72) Inventeur: PAULMIER, Olivier, 50300 PONTS (FR)
(74) Mandataire: Cabinet Le Guen Maillet

(56) Documents cités:
- DE-A1- 2 551 647
- FR-A1- 2 953 243
- US-A- 5 490 705

## Description

### DOMAINE TECHNIQUE

La présente invention concerne un véhicule pour le transport des chevaux ainsi qu'un procédé d'aménagement d'un tel véhicule.

### ETAT DE LA TECHNIQUE ANTERIEURE

Le document US-A-5,490,705 divulgue un véhicule pour le transport de chevaux.

Un véhicule pour le transport des chevaux peut prendre différentes formes tel qu'une remorque ou un camion. Selon le choix de l'utilisateur, l'aménagement intérieur d'un tel véhicule peut être du type standard ou du type stalle.

Pour l'aménagement standard, le véhicule présente un espace dans lequel loge le cheval et cet espace est délimité le long des flancs du cheval par des parois ou des bat-flancs et sur le devant du cheval par une barre de poitrail au-dessus de laquelle le cheval peut passer la tête.

Pour l'aménagement en stalle, l'espace dans lequel loge le cheval est cloisonné, et en particulier, sur le devant du cheval par une paroi fermée qui ne laisse pas passer la tête du cheval.

Chacun de ces aménagements présente des avantages, mais lorsqu'un véhicule est aménagé selon l'un ou l'autre type, il est impossible de le changer.

### EXPOSE DE L'INVENTION

Un objet de la présente invention est de proposer un véhicule modulable dont l'aménagement peut être modifié par l'utilisateur aux grés de ses besoins.

A cet effet, est proposé un véhicule pour le transport de chevaux et comportant :
- un plancher,
- un plafond,
- pour chaque cheval, une paroi frontale présentant une poutre haute en partie haute et une poutre intermédiaire sensiblement à mi-hauteur, et une grille amovible entre la poutre haute et la poutre intermédiaire et destinée à être disposée à l'avant du cheval entre le plancher et le plafond,
où chaque paroi frontale peut être fixée alternativement et de manière amovible dans une première position correspondant à un premier aménagement dit standard ou dans une deuxième position correspondant à un deuxième aménagement dit en stalle et où la paroi frontale comporte pour la grille, des moyens de maintien assurant une fixation amovible de ladite grille sur la poutre haute et la poutre intermédiaire.

Avantageusement, la grille comporte une partie centrale et une partie latérale qui s'étend de part et d'autre de la partie centrale, et la paroi frontale comporte pour chaque partie, des moyens de maintien assurant une fixation amovible de ladite partie sur la poutre haute et la poutre intermédiaire.

Avantageusement, chaque paroi frontale présente un système supérieur d'accrochage prévu en partie haute de la paroi frontale et un système inférieur d'accrochage prévu en partie basse de la paroi frontale et le véhicule présente en outre pour chaque position :
- un premier système de fixation qui est prévu au plancher pour coopérer avec le système inférieur d'accrochage afin d'assurer une fixation amovible dudit système inférieur d'accrochage, et
- un deuxième système de fixation qui est prévu au plafond pour coopérer avec le système supérieur d'accrochage afin d'assurer une fixation amovible dudit système supérieur d'accrochage.

Avantageusement, le système supérieur d'accrochage comporte deux pions pointant vers le haut et rétractables, le système inférieur d'accrochage comporte deux pions pointant vers le bas et dont au moins un est rétractable, chaque premier système de fixation comporte deux fûts inférieurs où chaque fût inférieur est prévu pour recevoir un pion du système inférieur d'accrochage, et chaque deuxième système de fixation comporte deux fûts supérieurs où chaque fût supérieur est prévu pour recevoir un pion du système supérieur d'accrochage.

Avantageusement, le véhicule comporte entre deux parois frontales voisines, une paroi de séparation perpendiculaire auxdites deux parois frontales et qui est fixée en partie haute au plafond et en partie basse au plancher.

Avantageusement, la paroi de séparation présente un battant monté sur des charnières.

L'invention propose également un procédé d'aménagement d'un véhicule selon l'une des variantes précédentes, le procédé comportant, le véhicule étant dans la deuxième position :
- une étape de désolidarisation au cours de laquelle la paroi frontale est désolidarisée du plancher et du plafond,
- une étape de solidarisation au cours de laquelle la paroi frontale, ainsi désolidarisée est fixée au plancher et au plafond dans la première position, et
- une étape de retrait au cours de laquelle la grille est retirée.

L'invention propose également un procédé d'aménagement inverse d'un véhicule selon l'une des variantes précédentes, le procédé comportant, le véhicule étant dans la première position :
- une étape de désolidarisation au cours de laquelle la paroi frontale est désolidarisée du plancher et du plafond,
- une étape de solidarisation au cours de laquelle la paroi frontale, ainsi désolidarisée est fixée au plancher et au plafond dans la deuxième position, et
- une étape de mise en place au cours de laquelle la grille est fixée à la paroi frontale.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective d'un véhicule selon l'invention selon un premier aménagement dit standard,
la Fig. 2 est une vue en perspective du véhicule selon l'invention selon un deuxième aménagement dit en stalle, et
la Fig. 3 est une vue de face d'une paroi frontale utilisée dans le véhicule.

### EXPOSE DETAILLE DE MODES DE REALISATION

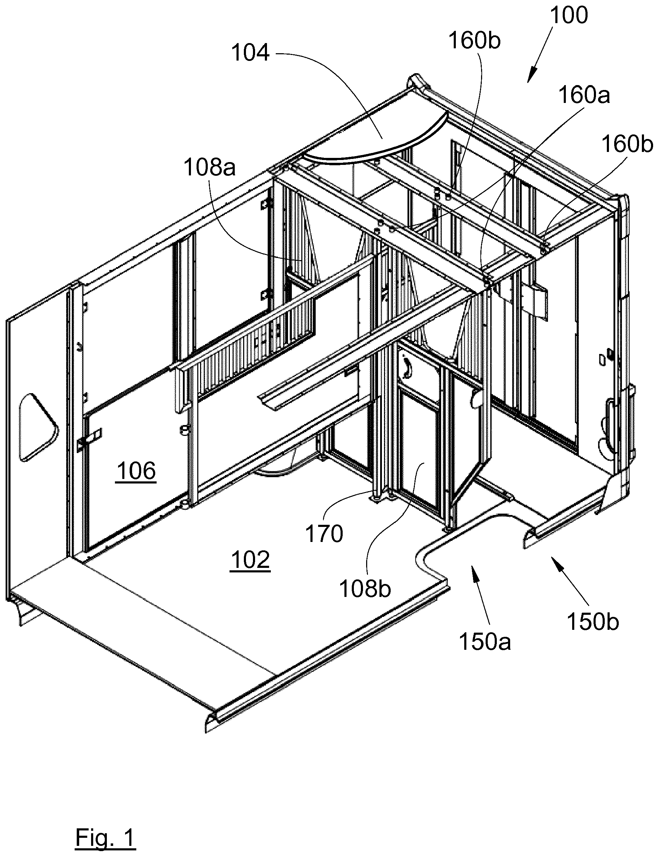

Dans la description qui suit, les termes relatifs à une position sont pris en référence à un véhicule en position de roulement, c'est-à-dire comme il est représenté sur la Fig. 1.

La Fig. 1 montre un véhicule 100 qui est ici une cabine arrière d'un camion, mais qui pourrait également être une remorque à atteler à un véhicule tracteur.

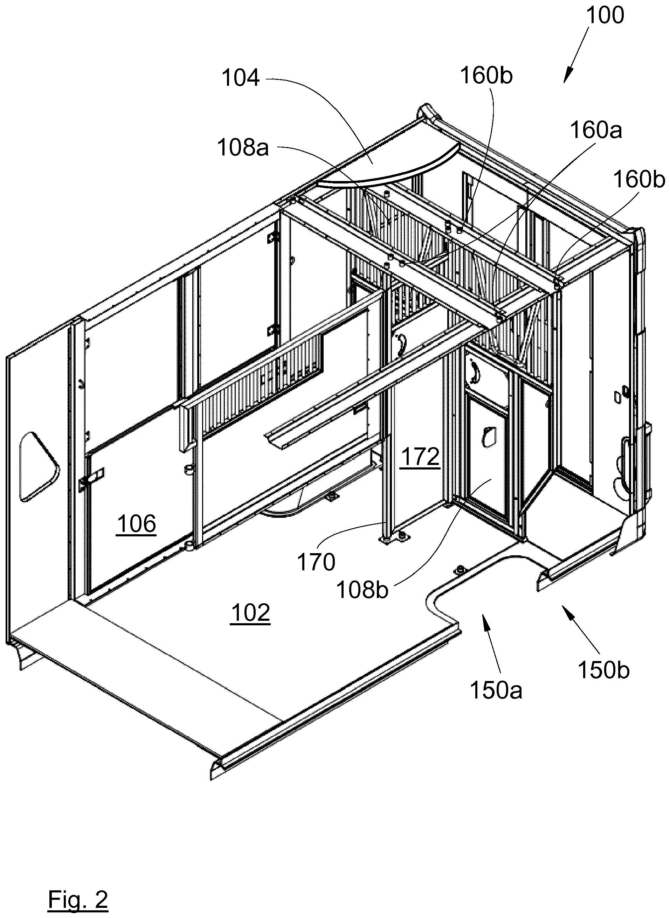

Sur la Fig. 1, le véhicule 100 est dans une première configuration dite standard, et sur la Fig. 2 le véhicule 100 est dans une deuxième configuration dite en stalle.

Le véhicule 100 comporte un plancher 102, un plafond 104 et des parois verticales qui sont disposées entre le plancher 102 et le plafond 104 et qui délimitent l'espace intérieur du véhicule 100 dans lequel loge les chevaux.

Dans le mode de réalisation de l'invention présenté sur les Figs. 1 et 2, le véhicule 100 est prévu pour deux chevaux disposés parallèlement à la direction d'avancement du véhicule 100, mais le véhicule peut être prévu pour plus de deux chevaux disposés différemment.

Les chevaux sont séparés l'un de l'autre par un bat-flanc 106 fixé à l'avant et à l'arrière à une structure porteuse du véhicule 100.

Pour chaque cheval, le véhicule 100 comporte, entre le plancher 102 et le plafond 104, une paroi frontale 108a-b qui est disposée à l'avant du cheval et qui est fixée de manière amovible dans une première position (Fig. 1) correspondant à un premier aménagement dit standard, ou dans une deuxième position (Fig. 2) correspondant à un deuxième aménagement dit en stalle.

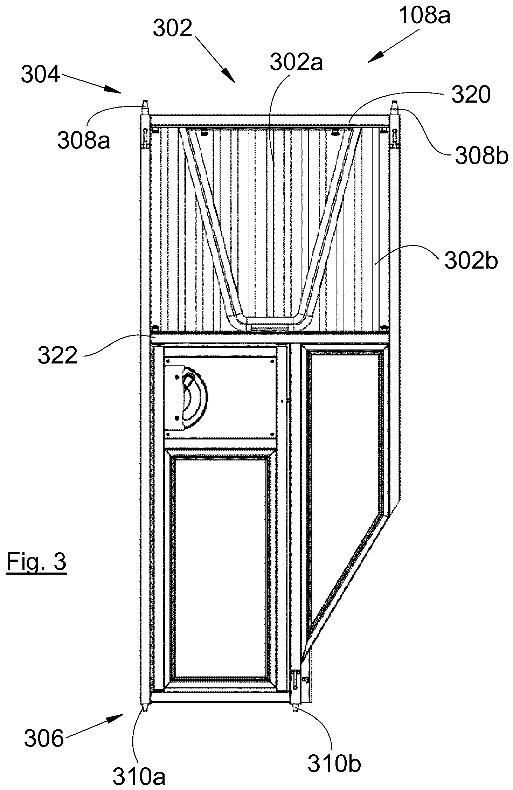

Pour permettre le passage de la tête du cheval en position standard, la paroi frontale 108a-b qui est représentée plus en détails sur la Fig. 3 présente, en partie haute, une grille 302 amovible.

Chaque paroi frontale 108a-b se positionne perpendiculairement à l'axe antéro-postérieur du cheval devant lequel elle est disposée.

Le fait que chaque paroi frontale 108a-b peut se fixer alternativement dans l'une ou l'autre des positions permet à l'utilisateur de moduler librement le véhicule 100 selon ses besoins.

A cette fin, chaque paroi frontale 108a-b présente un système supérieur d'accrochage 304 prévu en partie haute de la paroi frontale 108a-b et un système inférieur d'accrochage 306 prévu en partie basse de la paroi frontale 108a-b, et pour chaque paroi frontale 108a-b, le véhicule 100 présente, pour chaque position :
- un premier système de fixation 150a-b qui est prévu au plancher 102 pour coopérer avec le système inférieur d'accrochage 306 afin d'assurer une fixation amovible dudit système inférieur d'accrochage 306, et
- un deuxième système de fixation 160a-b qui est prévu au plafond 104 pour coopérer avec le système supérieur d'accrochage 304 afin d'assurer une fixation amovible dudit système supérieur d'accrochage 304.

Dans le mode de réalisation de l'invention présenté ici, le système supérieur d'accrochage 304 comporte deux pions 308a-b qui pointent vers le haut et sont rétractables à l'intérieur de la structure de la paroi frontale 108a-b, et le système inférieur d'accrochage 306 comporte deux pions 310a-b qui pointent vers le bas et dont au moins un est rétractable à l'intérieur de la structure de la paroi frontale 108a-b.

La rétractation de chaque pion 308a-b, 310b s'effectue par tous moyens appropriés. Par exemple ici, chaque pion 308a-b, 310b est muni d'une tirette que l'utilisateur peut tirer vers le bas pour les pions 308a-b du haut et vers le haut pour le pion 310b du bas pour les escamoter. Chaque pion 308a-b, 310b est monté sur un ressort pour assurer son retour dans sa position sortie lorsque la tirette est relâchée.

Chaque premier système de fixation 150a-b comporte deux fûts inférieurs au niveau du plancher 102 où chaque fût inférieur est prévu pour recevoir un pion 310a-b du système inférieur d'accrochage 306. Les deux fûts inférieurs du premier système de fixation 150a correspondant à la première position sont alignés et en arrière des deux fûts inférieurs du premier système de fixation 150b correspondant à la deuxième position.

Chaque deuxième système de fixation 160a-b comporte deux fûts supérieurs au niveau du plafond 104 où chaque fût supérieur est prévu pour recevoir un pion 308a-b du système supérieur d'accrochage 304. Les deux fûts supérieurs du deuxième système de fixation 160a correspondant à la première position sont alignés et en arrière des deux fûts supérieurs du deuxième système de fixation 160b correspondant à la deuxième position.

La paroi frontale 108a-b présente une poutre haute 320 en partie haute de la paroi frontale 108a-b et une poutre intermédiaire 322 sensiblement à mi-hauteur de la paroi frontale 108a-b et qui constitue la barre de poitrail lorsque la grille 302 est retirée dans la deuxième position.

La grille 302 s'étend entre la poutre haute 320 et la poutre intermédiaire 322.

Dans le mode de réalisation de la grille 302 présenté ici, la grille 302 comporte une partie centrale 302a et une partie latérale 302b qui s'étend de part et d'autre de la partie centrale 302a.

La frontière entre la partie centrale 302a et la partie latérale 302b prend la forme d'un U ouvert vers le haut.

Ainsi, en fonction des besoins, il est possible de retirer uniquement la partie centrale 302a, ou la partie centrale 302a et la partie latérale 302b afin d'obtenir un dégagement plus important.

La paroi frontale 108a-b comporte pour chaque partie 302a-b, des moyens de maintien assurant une fixation amovible de ladite partie 302a-b sur la poutre haute 320 et la poutre intermédiaire 322. Chaque moyen de maintien est constitué par exemple par un système vis-écrou, par un plot sur ressort....

Afin d'assurer la séparation de deux chevaux voisins, le véhicule 100 comporte entre les deux parois frontales 108a-b voisines, une paroi de séparation 170 perpendiculaire auxdites deux parois frontales 108a-b, qui prolonge ici le bat-flanc 106, et qui est fixée en partie haute au plafond 104 et en partie basse au plancher 102.

Dans la première position, la paroi de séparation 170 se trouve au niveau des têtes des chevaux et au-delà des parois frontales 108a-b, et dans la deuxième position, la paroi de séparation 170 se trouve toujours au niveau des têtes des chevaux mais en-deçà des parois frontales 108a-b.

Pour permettre le passage d'une personne de part et d'autre de la paroi de séparation 170, celle-ci présente un battant 172 monté sur des charnières.

Dans le cadre de l'invention, il est également proposé un procédé d'aménagement du véhicule 100 présenté ci-dessus. Ce procédé d'aménagement consiste, à partir de la deuxième position, en :
- une étape de désolidarisation au cours de laquelle la paroi frontale 108a-b est désolidarisée du plancher 102 et du plafond 104, la paroi frontale 108a-b étant ainsi désolidarisée du premier système de fixation 150b et du deuxième système de fixation 160b correspondant à la deuxième position,
- une étape de solidarisation au cours de laquelle la paroi frontale 108a-b, ainsi désolidarisée est fixée au plancher 102 et au plafond 104 dans la première position, la paroi frontale 108a-b étant ainsi fixée au premier système de fixation 150a et au deuxième système de fixation 160a correspondant à la première position, et
- une étape de retrait au cours de laquelle la grille 302 est retirée de la paroi frontale 108a-b.

Un procédé d'aménagement inverse est proposé pour passer de la première position à la deuxième position et il consiste, à partir de la première position, en :
- une étape de désolidarisation au cours de laquelle la paroi frontale 108a-b est désolidarisée du plancher 102 et du plafond 104, la paroi frontale 108a-b étant ainsi désolidarisée du premier système de fixation 150a et du deuxième système de fixation 160a correspondant à la première position,
- une étape de solidarisation au cours de laquelle la paroi frontale 108a-b, ainsi désolidarisée est fixée au plancher 102 et au plafond 104 dans la première position, la paroi frontale 108a-b étant ainsi fixée au premier système de fixation 150b et au deuxième système de fixation 160b correspondant à la deuxième position, et
- une étape de mise en place au cours de laquelle la grille 302 est fixée à la paroi frontale 108a-b.

## Revendications

1. Véhicule (100) pour le transport de chevaux et comportant :
- un plancher (102),
- un plafond (104),
- pour chaque cheval, une paroi frontale (108a-b) présentant une poutre haute (320) en partie haute et une poutre intermédiaire (322) sensiblement à mi-hauteur, et une grille (302) amovible entre la poutre haute (320) et la poutre intermédiaire (322) et destinée à être disposée à l'avant du cheval entre le plancher (102) et le plafond (104),
où chaque paroi frontale (108a-b) peut être fixée alternativement et de manière amovible dans une première position correspondant à un premier aménagement dit standard ou dans une deuxième position correspondant à un deuxième aménagement dit en stalle et où la paroi frontale (108a-b) comporte pour la grille (302), des moyens de maintien assurant une fixation amovible de ladite grille (302) sur la poutre haute (320) et la poutre intermédiaire (322).

2. Véhicule (100) selon la revendication 1, **caractérisé en ce que** la grille (302) comporte une partie centrale (302a) et une partie latérale (302b) qui s'étend de part et d'autre de la partie centrale (302a), et **en ce que** la paroi frontale (108a-b) comporte pour chaque partie (302a-b), des moyens de maintien assurant une fixation amovible de ladite partie (302a-b) sur la poutre haute (320) et la poutre intermédiaire (322).

3. Véhicule (100) selon l'une des revendications 1 ou 2, **caractérisé en ce que** chaque paroi frontale (108a-b) présente un système supérieur d'accrochage (304) prévu en partie haute de la paroi frontale (108a-b) et un système inférieur d'accrochage (306) prévu en partie basse de la paroi frontale (108a-b) et **en ce que** le véhicule (100) présente en outre pour chaque position :
- un premier système de fixation (150a-b) qui est prévu au plancher (102) pour coopérer avec le système inférieur d'accrochage afin d'assurer une fixation amovible dudit système inférieur d'accrochage, et
- un deuxième système de fixation (160a-b) qui est prévu au plafond (104) pour coopérer avec le système supérieur d'accrochage afin d'assurer une fixation amovible dudit système supérieur d'accrochage.

4. Véhicule (100) selon la revendication 3, **caractérisé en ce que** le système supérieur d'accrochage (304) comporte deux pions (308a-b) pointant vers le haut et rétractables, **en ce que** le système inférieur d'accrochage (306) comporte deux pions (310a-b) pointant vers le bas et dont au moins un est rétractable, **en ce que** chaque premier système de fixation (150a-b) comporte deux fûts inférieurs où chaque fût inférieur est prévu pour recevoir un pion (310a-b) du système inférieur d'accrochage (306), et **en ce que** chaque deuxième système de fixation (160a-b) comporte deux fûts supérieurs où chaque fût supérieur est prévu pour recevoir un pion (308a-b) du système supérieur d'accrochage (304).

5. Véhicule (100) selon l'une des revendications 1 à 4, **caractérisé en ce qu'**il comporte entre deux parois frontales (108a-b) voisines, une paroi de séparation (170) perpendiculaire auxdites deux parois frontales (108a-b) et qui est fixée en partie haute au plafond (104) et en partie basse au plancher (102).

6. Véhicule (100) selon la revendication 5, **caractérisé en ce que** la paroi de séparation (170) présente un battant (172) monté sur des charnières.

7. Procédé d'aménagement d'un véhicule (100) selon l'une des revendications 1 à 6, le procédé comportant, le véhicule (100) étant dans la deuxième position :
- une étape de désolidarisation au cours de laquelle la paroi frontale (108a-b) est désolidarisée du plancher (102) et du plafond (104),
- une étape de solidarisation au cours de laquelle la paroi frontale (108a-b), ainsi désolidarisée est fixée au plancher (102) et au plafond (104) dans la première position, et
- une étape de retrait au cours de laquelle la grille (302) est retirée.

8. Procédé d'aménagement inverse d'un véhicule (100) selon l'une des revendications 1 à 6, le procédé comportant, le véhicule (100) étant dans la première position :
- une étape de désolidarisation au cours de laquelle la paroi frontale (108a-b) est désolidarisée du plancher (102) et du plafond (104),
- une étape de solidarisation au cours de laquelle la paroi frontale (108a-b), ainsi désolidarisée est fixée au plancher (102) et au plafond (104) dans la deuxième position, et
- une étape de mise en place au cours de laquelle la grille (302) est fixée à la paroi frontale (108a-b).

## Patentansprüche

1. Fahrzeug (100) zum Transport von Pferden und aufweisend:
- einen Boden (102),
- eine Decke (104),
- für jedes Pferd eine Frontwand (108a-b), aufweisend einen hohen Balken (320) im hohen Teil und einen Zwischenbalken (322) etwa auf halber Höhe, und ein Gitter (302) zwischen dem hohen Balken (320) und dem Zwischenbalken (322), das lösbar und dazu bestimmt ist, vor dem Pferd zwischen dem Boden (102) und der Decke (104) angeordnet zu sein,
wobei jede Frontwand (108a-b) alternativ und lösbar in einer ersten Position befestigbar ist, die einer ersten Einrichtung, bezeichnet als Standard, entspricht, oder in einer zweiten Position, die einer zweiten Einrichtung, bezeichnet als In-Box, entspricht, und wobei die Frontwand (108a-b) für das Gitter (302) Haltemittel aufweist, die eine lösbare Befestigung des Gitters (302) auf dem hohen Balken (320) und dem Zwischenbalken (322) sichern.

2. Fahrzeug (100) nach Anspruch 1, **dadurch gekennzeichnet, dass** das Gitter (302) einen zentralen Teil (302a) und einen seitlichen Teil (302b) aufweist, der sich beiderseits des zentralen Teils (302a) erstreckt, und dass die Frontwand (108a-b) für jeden Teil (302a-b) Haltemittel aufweist, die eine lösbare Befestigung des Teils (302a-b) auf dem hohen Balken (320) und dem Zwischenbalken (322) sichern.

3. Fahrzeug (100) nach einem der Ansprüche 1 oder 2, **dadurch gekennzeichnet, dass** jede Frontwand (108a-b) ein oberes Kopplungssystem (304), das im hohen Teil der Frontwand (108a-b) vorgesehen ist, und ein unteres Kopplungssystem (306), das im tiefen Teil der Frontwand (108a-b) vorgesehen ist, aufweist, und dass das Fahrzeug (100) ferner für jede Position aufweist:
- ein erstes Befestigungssystem (150a-b), das am Boden (102) vorgesehen ist, um mit dem unteren Kopplungssystem zusammenzuwirken, um eine lösbare Befestigung des unteren Kopplungssystems zu sichern, und
- ein zweites Befestigungssystem (160a-b), das an der Decke (104) vorgesehen ist, um mit dem oberen Kopplungssystem zusammenzuwirken, um eine lösbare Befestigung des oberen Kopplungssystems zu sichern.

4. Fahrzeug (100) nach Anspruch 3, **dadurch gekennzeichnet, dass** das obere Kopplungssystem (304) zwei Zapfen (308a-b) aufweist, die nach oben zeigen und einziehbar sind, dass das untere Kopplungssystem (306) zwei Zapfen (310a-b) aufweist, die nach unten zeigen und von denen mindestens einer einziehbar ist, dass jedes erste Befestigungssystem (150a-b) zwei untere Schäfte aufweist, wobei jeder untere Schaft zur Aufnahme eines Zapfens (310a-b) des unteren Kopplungssystems (306) vorgesehen ist, und dass jedes zweite Befestigungssystem (160a-b) zwei obere Schäfte aufweist, wobei jeder obere Schaft zur Aufnahme eines Zapfens (308a-b) des oberen Kopplungssystems (304) vorgesehen ist.

5. Fahrzeug (100) nach einem der Ansprüche 1 bis 4, **dadurch gekennzeichnet, dass** es zwischen zwei benachbarten Frontwänden (108a-b) eine Trennwand (170) aufweist, die senkrecht zu den zwei Frontwänden (108ab) ist und die im hohen Teil an der Decke (104) und im tiefen Teil am Boden (102) befestigt ist.

6. Fahrzeug (100) nach Anspruch 5, **dadurch gekennzeichnet, dass** die Trennwand (170) einen Flügel (172) aufweist, der an Scharnieren angebracht ist.

7. Verfahren zur Einrichtung eines Fahrzeugs (100) nach einem der Ansprüche 1 bis 6, wobei das Verfahren aufweist, wenn das Fahrzeug (100) in der zweiten Position ist:
- einen Schritt des Lösens, bei dem die Frontwand (108a-b) vom Boden (102) und von der Decke (104) gelöst wird,
- einen Schritt des festen Verbindens, bei dem die so gelöste Frontwand (108a-b) am Boden (102) und an der Decke (104) in der ersten Position befestigt wird, und
- einen Schritt des Entfernens, bei dem das Gitter (302) entfernt wird.

8. Verfahren zur umgekehrten Einrichtung eines Fahrzeugs (100) nach einem der Ansprüche 1 bis 6, wobei das Verfahren aufweist, wenn das Fahrzeug (100) in der ersten Position ist:
- einen Schritt des Lösens, bei dem die Frontwand (108a-b) vom Boden (102) und von der Decke (104) gelöst wird,
- einen Schritt des festen Verbindens, bei dem die so gelöste Frontwand (108a-b) am Boden (102) und an der Decke (104) in der zweiten Position befestigt wird, und
- einen Schritt des Platzierens, bei dem das Gitter (302) an der Frontwand (108a-b) befestigt wird.

## Claims

1. Vehicle (100) for the transportation of horses and comprising:
- a floor (102),
- a ceiling (104),
- for each horse, a front wall (108a-b) having a top beam (320) in the upper portion and an intermediate beam (322) essentially at mid-height, and a removable grill (302), between the top beam (320) and the intermediate beam (322), which is designed to be arranged in front of the horse, between the floor (102) and the ceiling (104),
in which each front wall (108a-b) can be attached alternatively and removably in a first position corresponding to a first so-called standard configuration, or in a second position corresponding to a second so-called stall configuration, and in which the front wall (108a-b) comprises, for the grill (302), holding means that provide removable attachment of said grill (302) to the top beam (320) and the intermediate beam (322).

2. Vehicle (100) according to Claim 1, **characterized in that** the grill (302) comprises a central portion (302a) and a lateral portion (302b) which extends on either side of the central portion (302a), and **in that** the front wall (108a-b) comprises, for each portion (302a-b), holding means that provide removable attachment of said portion (302a-b) to the top beam (320) and the intermediate beam (322).

3. Vehicle (100) according to either of Claims 1 and 2, **characterized in that** each front wall (108a-b) has an upper latching system (304) provided at the top of the front wall (108a-b) and a lower latching system (306) provided at the bottom of the front wall (108a-b), and **in that** the vehicle (100) further has, for each position:
- a first attachment system (150a-b) that is provided on the floor (102) so as to cooperate with the lower latching system in order to provide removable attachment of said lower latching system, and
- a second attachment system (160a-b) that is provided on the ceiling (104) so as to cooperate with the upper latching system in order to provide removable attachment of said upper latching system.

4. Vehicle (100) according to Claim 3, **characterized in that** the upper latching system (304) comprises two upward-pointing and retractable pins (308a-b), **in that** the lower latching system (306) comprises two downward-pointing pins (310a-b) of which at least one is retractable, **in that** each first attachment system (150a-b) comprises two lower slots, each lower slot being intended for receiving a pin (310a-b) of the lower latching system (306), and **in that** each second attachment system (160a-b) comprises two upper slots, each upper slot being intended for receiving a pin (308a-b) of the upper latching system (304).

5. Vehicle (100) according to one of Claims 1 to 4, **characterized in that** it comprises two adjacent front walls (108a-b), a separation wall (170) which is perpendicular to said two front walls (108a-b) and which is attached at the top to the ceiling (104) and at the bottom to the floor (102).

6. Vehicle (100) according to Claim 5, **characterized in that** the separation wall (170) has an opening leaf (172) mounted on hinges.

7. Method for configuring of a vehicle (100) according to one of Claims 1 to 6, the method comprising, with the vehicle (100) in the second position:
- a detaching step in which the front wall (108a-b) is detached from the floor (102) and from the ceiling (104),
- an attaching step in which the front wall (108a-b), thus detached, is attached to the floor (102) and to the ceiling (104) in the first position, and
- a removal step in which the grill (302) is removed.

8. Method for reverse configuring of a vehicle (100) according to one of Claims 1 to 6, the method comprising, with the vehicle (100) in the first position:
- a detaching step in which the front wall (108a-b) is detached from the floor (102) and from the ceiling (104),
- an attaching step in which the front wall (108a-b), thus detached, is attached to the floor (102) and to the ceiling (104) in the second position, and
- an installing step in which the grill (302) is attached to the front wall (108a-b).
